# EUROPÄISCHE PATENTSCHRIFT

(11) **EP 3 776 222 B1**
(45) Veröffentlichungstag und Bekanntmachung des Hinweises auf die Patenterteilung: **01.02.2023**
(21) Anmeldenummer: 19712558.6
(22) Anmeldetag: 19.03.2019
(51) Int. Cl.: G06F 12/109

(54) **VERFAHREN ZUM BEREITSTELLEN VON ANWENDUNGSDATEN ZUMINDEST EINER AUF EINEM STEUERGERÄT EINES FAHRZEUGS AUSFÜHRBAREN ANWENDUNG, VERFAHREN ZUM KALIBRIEREN EINES STEUERGERÄTS, STEUERGERÄT UND AUSWERTEEINRICHTUNG**
METHOD FOR PROVIDING APPLICATION DATA OF AT LEAST ONE APPLICATION EXECUTABLE ON A CONTROL UNIT OF A VEHICLE, METHOD FOR CALIBRATING A CONTROL UNIT, CONTROL UNIT, AND ANALYSIS DEVICE
PROCÉDÉ DE FOURNITURE DE DONNÉES D'APPLICATION D'AU MOINS UNE APPLICATION EXÉCUTABLE SUR UN APPAREIL DE COMMANDE D'UN VÉHICULE, PROCÉDÉ D'ÉTALONNAGE D'UN APPAREIL DE COMMANDE, APPAREIL DE COMMANDE ET SYSTÈME D'ÉVALUATION

(30) Priorität: 06.04.2018 DE 102018205204
(43) Veröffentlichungstag der Anmeldung: 17.02.2021
(73) Patentinhaber: Robert Bosch GmbH, 70442 Stuttgart (DE)
(72) Erfinder: KRAEMER, Florian, 74629 Pfedelbach (DE); DECKERT, Michael, 74251 Lehrensteinsfeld (DE); NAGEL, Patrick, 71634 Ludwigsburg (DE); SHCHETYNIN, Maksym, 71088 Holzgerlingen (DE)
(86) Internationale Anmeldenummer: PCT/EP2019/056775
(87) Internationale Veröffentlichungsnummer: WO 2019/192835

(56) Entgegenhaltungen:
- DE-A1- 10 064 000
- US-A1- 2017 046 358

## Beschreibung

### Stand der Technik

Die Erfindung geht aus von einem Verfahren oder einer Vorrichtung nach Gattung der unabhängigen Ansprüche. Gegenstand der vorliegenden Erfindung ist auch ein Computerprogramm.

In Steuergeräten von Kraftfahrzeugen werden in der Regel konventionelle Mikrocontroller mit integrierten Peripheriekomponenten wie beispielsweise Flash- oder RAM-Speicher eingesetzt. Solche Bausteine besitzen meist keine Speichervirtualisierungsmechanismen mit Speicherverwaltungseinheit, auch Memory Management Unit oder kurz MMU genannt. Die Messung und Verstellung von Parametern wird beispielsweise über das XCP-Protokoll (Universal Measurement and Calibration Protocol) ermöglicht. Dabei können beliebige Speicherzellen ausgelesen und auf einem Messtechnikrechner dargestellt werden. Aufgrund der fehlenden Speicherverwaltungseinheit sind solche Steuergeräte meist nicht für den Einsatz moderner Betriebssysteme wie Linux oder QNX geeignet.

In Infotainment-Steuergeräten werden bereits heute moderne Mikroprozessoren eingesetzt, die über schnelle Recheneinheiten, externe Speicher und Speicherverwaltungseinheiten verfügen. Mitunter kommen hier Betriebssysteme zum Einsatz, die Speichervirtualisierung verwenden. Dabei werden überwiegend einfache Logging-Mechanismen eingesetzt, die die Parametrierbarkeit des Systems einschränken.

Die US 2017/046358 A1 offenbart ein Verfahren zum Bertreiben eines elektronischen Geräts unter Verwendung eines virtuellen Dateisystems. Bei dem elektronischen Gerät kann es sich beispielsweise um ein Unterhaltungsgerät oder eine Haupteinheit eines Fahrzeugs handeln.

In Fahrerassistenzsystemen spielen moderne Betriebssysteme und Mikroprozessoren eine wichtige Rolle. Diese erfordern umfassende Mess- und Kalibriermöglichkeiten.

### Offenbarung der Erfindung

Vor diesem Hintergrund werden mit dem hier vorgestellten Ansatz ein Verfahren, eine Vorrichtung, ein Computerprogramm und ein maschinenlesbares Speichermedium gemäß den Hauptansprüchen vorgestellt. Vorteilhafte Ausgestaltungen ergeben sich aus den Unteransprüchen.

Der hier vorgestellte Ansatz beruht auf der Erkenntnis, dass in einem Mikroprozessor, wie sie beispielsweise in Steuergeräten für Fahrerassistenzsysteme eingesetzt werden, ein PMD (PMD = Process Measurement Daemon) oder eine sonstige in einem virtuellen Speicher ausführbare Kommunikationsanwendung zur Kommunikation mit einem steuergeräteexternen Messrechner eingesetzt werden kann. Dadurch wird ein einfaches Auslesen von Mess- und Kalibrierdaten aus unterschiedlich allokierten Speicherbereichen des Mikroprozessors ermöglicht, und zwar unabhängig von einem tatsächlichen Memory Mapping der virtuellen Speicherverwaltung.

Unter anderem beschreibt der hier vorgestellte Ansatz, wie auf Mikroprozessoren mit modernen Betriebssystemen und Speichervirtualisierung eine Mess- und Kalibrierschnittstelle mit XCP eingesetzt werden kann. Diese Möglichkeit ist für Fahrerassistenzsteuergeräte, etwa für das autonome Fahren, unerlässlich. Insbesondere ermöglicht der hier vorgestellte Ansatz beispielsweise die Implementierung einer XCP-Messtechnikschnittstelle unter POSIX-kompatiblen Betriebssystemen (Portable Operating System Interface).

Dies hat den Vorteil, dass in Fahrerassistenzsteuergeräten ein bereits etabliertes Messtechnikprotokoll einschließlich entsprechender PC-Tools weiterverwendet werden kann. Somit können neue mikroprozessorbasierte Systeme mit Speichervirtualisierung weiterhin mit etablierten Messwerkzeugen analysiert und kalibriert werden. Damit kann der Anpassungsaufwand im Bereich der Messtechnik angesichts des weitreichenden Technologiewandels bei Steuergeräten auf ein Minimum reduziert werden.

Es wird ein Verfahren zum Bereitstellen von Anwendungsdaten zumindest einer auf einem Steuergerät für ein Fahrzeug ausführbaren Anwendung vorgestellt, wobei das Steuergerät Komponenten zum Ausführen eines Betriebssystems mit virtueller Speicherverwaltung umfasst, wobei das Verfahren folgende Schritte umfasst:
Auslesen eines Anwendungsadressraumes eines ersten virtuellen Speichers, wobei der Anwendungsadressraum einem Prozess der Anwendung zugeordnet ist und einen von den Anwendungsdaten belegten Bereich eines physischen Speichers des Steuergeräts abbildet; und
Einblenden des Anwendungsadressraumes eines weiteren virtuellen Speichers in einen virtuellen Adressraum, der einem Prozess einer Kommunikationsanwendung zum Datenaustausch über eine Kommunikationsschnittstelle zu einer externen Auswerteeinrichtung zugeordnet ist, um die Anwendungsdaten über die Kommunikationsschnittstelle bereitzustellen.

Bei den Anwendungsdaten kann es sich beispielsweise um Mess- oder Kalibrierdaten handeln. Die Anwendungsdaten können von dem Prozess der Anwendung verwendet und/oder erstellt werden oder worden sein. Unter einem Steuergerät kann beispielsweise ein Motorsteuergerät oder ein Gerät zum Steuern von Fahrerassistenzfunktionen verstanden werden. Unter einer Anwendung kann ein Computerprogramm oder eine Software verstanden werden. Beispielsweise kann unter einer Anwendung eine als Slave fungierende Instanz eines Programms verstanden werden. Die Anwendung kann insbesondere innerhalb eines virtuellen Prozessbereiches ausführbar sein. Bei den Komponenten kann es sich beispielsweise um einen Mikroprozessor oder -controller oder einen flüchtigen oder nicht flüchtigen Speicher handeln. Bei dem Betriebssystem kann es sich insbesondere um ein POSIX-konformes Betriebssystem , insbesondere auch ein Echtzeitbetriebssystem, wie beispielsweise Linux oder QNX handeln. Unter virtueller Speicherverwaltung kann eine Art der Speicherverwaltung verstanden werden, bei der die von einer Anwendung generierten Speicheradressen einen virtuellen Adressraum bilden, dessen Adressen nicht direkt an einen Speicherbus, sondern an eine Speicherverwaltungseinheit gehen. Diese bildet die virtuellen Adressen auf Adressen des tatsächlich vorhandenen physischen Speichers ab. In diesem Sinn kann unter einem virtuellen Adressraum ein vom physischen Speicher unabhängiger Adressraum verstanden werden, den das Betriebssystem einem Prozess zuweist. Dementsprechend kann unter einem Anwendungsadressraum ein einem Prozess der Anwendung vom Betriebssystem zugewiesener, virtueller Adressraum verstanden werden, der wiederum auf einen bestimmten Adressraum des physischen Speichers verweist. Der Anwendungsadressraum einer Anwendung und/oder der virtuelle Adressraum der Kommunikationsanwendung kann Daten in Form von Zeigern aufweisen, die auf Speicherabschnitte des physischen Speicher verweisen.

Unter einem physischen Speicher kann ein flüchtiger oder nicht flüchtiger Speicher, etwa in Form von Flash- oder RAM-Speicher, verstanden werden. Der physische Speicher kann beispielsweise in den Mikroprozessor oder -controller des Steuergeräts integriert sein oder als externer Speicher realisiert sein. Unter einer Kommunikationsanwendung kann insbesondere ein Programmierwerkzeug zur Codeanalyse, beispielsweise ein Process Measuremenet Daemon, ein sogenannter PMD, oder Ähnliches, verstanden werden. Unter einer Kommunikationsschnittstelle kann beispielsweise eine Mess- und Kalibrierschnittstelle zum Austausch von Mess- und Kalibrierdaten, etwa über das XCP-Protokoll oder ein sonstiges geeignetes Netzwerkprotokoll, verstanden werden. Die Kommunikationsschnittstelle kann hardwareseitig als Funkschnittstelle oder kabelgebundene Schnittstelle, etwa als Ethernet-Schnittstelle, ausgebildet sein. Unter einer steuergeräteexternen Auswerteeinrichtung kann beispielsweise ein mit dem Steuergerät koppelbarer Mess- und Kalibriercomputer, etwa in Form eines Laptops oder PCs, verstanden werden. Die Kommunikationsschnittstelle kann eine Protokollschicht aufweisen, die von der Transportschicht getrennt ist, sodass beispielsweise eine auf dem CAN-Bus basierende Transportschicht verwendet werden kann.

Gemäß einer Ausführungsform können in einem Schritt des Bereitstellens die Anwendungsdaten über eine XCP-Schnittstelle als die Kommunikationsschnittstelle bereitgestellt werden. Unter einer XCP-Schnittstelle kann eine Schnittstelle zum Datenaustausch über ein standardisiertes Mess- und Kalibrierprotokoll für die Steuergerätekalibrierung, auch Universal Measurement and Calibration Protocol genannt, verstanden werden. Dadurch kann die universelle Anwendbarkeit des Verfahrens gewährleistet werden.

Der Prozess der Kommunikationsanwendung kann ausgebildet sein, um den Schritt des Auslesens und den Schritt des Einblendens ohne Zuhilfenahme einer Hardwareeinheit zur Speicherverwaltung auszuführen. Somit kann das Steuergerät ohne eine sogenannte MMU (Memory Management Unit) ausgeführt sein.

Gemäß einer weiteren Ausführungsform kann im Schritt des Auslesens zumindest eine physische und/oder virtuelle Adresse der Anwendungsdaten als der Anwendungsadressraum ausgelesen werden. Unter einer physischen Adresse kann ein Ort eines belegten Bereichs des physischen Speichers verstanden werden. Unter einer virtuellen Adresse kann ein auf die physische Adresse verweisender Bereich eines virtuellen Speichers verstanden werden. Durch diese Ausführungsform kann eine effiziente und zuverlässige Ermittlung des Anwendungsadressraumes sichergestellt werden.

Des Weiteren kann im Schritt des Einblendens der Anwendungsadressraum mittels eines POSIX-basierten Betriebssystems des Steuergeräts in den virtuellen Adressraum eingeblendet werden. Unter einem POSIX-basierten Betriebssystem kann ein POSIX-konformes, weitgehend POSIX-konformes oder durch Kompatibilitätserweiterungen POSIX-konform gemachtes Betriebssystem verstanden werden. Durch diese Ausführungsform kann eine hocheffiziente Speicherverwaltung realisiert werden.

Gemäß einer weiteren Ausführungsform kann der Anwendungsadressraum ansprechend auf ein vorbestimmtes Ereignis des der Anwendung zugeordneten Prozesses ausgelesen werden. Beispielsweise kann der Schritt des Auslesens ansprechend auf ein Starten oder Beenden des der Anwendung zugeordneten Prozesses durchgeführt werden. Auf diese Weise können beispielsweise stets aktuelle Daten über die Kommunikationsschnittstelle ausgelesen werden.

Es kann im Schritt des Auslesens ein zweiter virtueller Anwendungsadressraum eines zweiten virtuellen Speichers ausgelesen werden, der einem Prozess einer zweiten auf dem Steuergerät ausführbaren Anwendung zugeordnet ist und einen von zweiten Anwendungsdaten der zweiten Anwendung belegten Bereich des physischen Speichers repräsentiert. Dementsprechend kann im Schritt des Einblendens der zweite Anwendungsadressraum in den virtuellen Adressraum eingeblendet werden, um die zweiten Anwendungsdaten über die Kommunikationsschnittstelle bereitzustellen. Die zweiten Anwendungsdaten können von dem Prozess der zweiten Anwendung verwendet und/oder erstellt werden oder worden sein. Indem durch den Prozess der Kommunikationsanwendung auf mehrere virtuelle Speicher mehrerer Anwendungen zugegriffen werden kann, können gemeinsam Daten mehrerer unterschiedlicher Anwendungen des Steuergeräts über die Kommunikationsschnittstelle ausgelesen und kalibriert werden.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung des Fahrzeugs. Hierzu kann das Steuergerät beispielsweise auf Sensorsignale wie Beschleunigungs-, Druck-, Lenkwinkel- oder Umfeldsensorsignale zugreifen. Die Ansteuerung erfolgt über Aktoren wie Brems- oder Lenkaktoren oder ein Motorsteuergerät des Fahrzeugs.

Gemäß einer Ausführungsform kann das Steuergerät als die Einheiten zumindest einen Mikroprozessor, einen physischen Speicher, einen der Anwendung zugeordneten ersten virtuellen Speicher und einen der Kommunikationsanwendung zugeordneten zweiten virtuellen Speicher aufweisen. Dadurch kann das Steuergerät mit hoher Rechenleistung bei verhältnismäßig geringen Herstellungskosten und geringem Platzbedarf realisiert werden.

Der hier vorgestellte Ansatz schafft ferner ein Verfahren zum Kalibrieren eines Steuergeräts unter Verwendung von Anwendungsdaten, die in einem Verfahren gemäß einer der vorstehenden Ausführungsformen bereitgestellt wurden, wobei das Verfahren folgende Schritte umfasst:
Einlesen der Anwendungsdaten über die Kommunikationsschnittstelle unter Verwendung der Kommunikationsanwendung;
Generieren einer Kalibrierinformation zum Verstellen zumindest eines Parameters des Steuergeräts unter Verwendung der Anwendungsdaten; und
Ausgeben der Kalibrierinformation an die Kommunikationsschnittstelle, um das Steuergerät zu kalibrieren.

Unter einer Kalibrierinformation kann beispielsweise eine Beschreibungsdatei für steuergeräteinterne Größen, etwa eine A2L-Datei, oder eine sonstige zur Durchführung von Mess- oder Verstelloperationen geeignete Information verstanden werden.

Die genannten Verfahren können beispielsweise in Software oder Hardware oder in einer Mischform aus Software und Hardware, beispielsweise in einem Steuergerät, implementiert sein.

Der hier vorgestellte Ansatz schafft zudem eine Auswerteeinrichtung mit Einheiten, die ausgebildet sind, um das Verfahren gemäß der vorstehenden Ausführungsform auszuführen und/oder anzusteuern. Unter einer Auswerteeinrichtung kann ein steuergeräte- oder fahrzeugexterner Computer verstanden werden.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine schematische Darstellung einer Topologie von Multi-XCP-Slaves;
- Fig. 2: eine schematische Darstellung eines Steuergeräts aus Fig. 1;
- Fig. 3: eine schematische Darstellung einer Speicherorganisation in einem Steuergerät gemäß einem Ausführungsbeispiel;
- Fig. 4: eine schematische Darstellung eines Mikroprozessors aus Fig. 2;
- Fig. 5: ein Ablaufdiagramm eines Verfahrens zum Bereitstellen von Anwendungsdaten gemäß einem Ausführungsbeispiel;
- Fig. 6: ein Ablaufdiagramm eines Verfahrens zum Kalibrieren eines Steuergeräts gemäß einem Ausführungsbeispiel; und
- Fig. 7: eine schematische Darstellung einer Auswerteeinrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

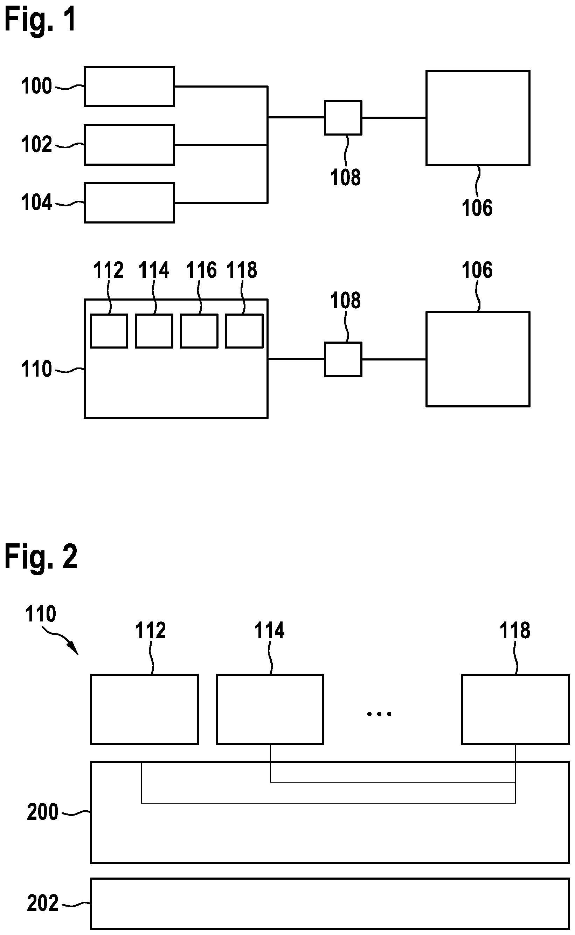

Fig. 1 zeigt eine schematische Darstellung zweier Topologien von Multi-XCP-Slaves. Die Topologien sind zum besseren Vergleich übereinander dargestellt und durch eine gestrichelte Linie voneinander getrennt.

Die obere Topologie umfasst beispielhaft ein erstes Steuergerät 100, das einen ersten XCP-Slave repräsentiert, ein zweites Steuergerät 102, das einen zweiten XCP-Slave repräsentiert, und ein drittes Steuergerät 104, das einen dritten XCP-Slave repräsentiert. Eine steuergeräteexterne Auswerteeinrichtung 106, hier beispielhaft ein Messtechnik-PC, ist über eine XCP-Schnittstelle als Kommunikationsschnittstelle 108 mit jedem der drei Steuergeräte 100, 102, 104 zu Mess- und Kalibrierzwecken gekoppelt. Die kompletten Steuergeräte 100, 102, 104 werden jeweils als XCP-Slave betrachtet. Die Auswerteeinrichtung 106 ist dabei in der Lage, mit mehreren Slaves, etwa mit einem ESP-Steuergerät und einem Motorsteuergerät, gleichzeitig zu kommunizieren, beispielsweise um Mess- und/oder Kalibrierdaten auszutauschen.

Die untere Topologie zeigt ein Steuergerät 110 gemäß einem Ausführungsbeispiel des hier vorgestellten Ansatzes. Gemäß dem hier vorgestellten Ansatz wird nun beispielsweise jede Instanz einer Applikation in dem Steuergerät 110 als XCP-Slave betrachtet. Beispielhaft sind als in dem Steuergerät 110 ausführbare Instanzen eine erste Anwendung 112, eine zweite Anwendung 114, eine dritte Anwendung 116 und eine Kommunikationsanwendung 118 gezeigt. Die Kommunikationsanwendung 118 ist ausgebildet, um über eine externe Kommunikationsschnittstelle 108 mit der Auswerteeinrichtung 106 zu kommunizieren, also Daten in das jeweilige Steuergerät 110 zu schreiben oder aus dem Steuergerät 110 auszulesen.

Das in der unteren Topologie gezeigte Steuergerät 110, etwa ein POSIX-Steuergerät mit virtueller Speicherverwaltung, ist ähnlich wie die in der oberen Topologie gezeigten Steuergeräte 100, 102, 104 über die Kommunikationsschnittstelle 108 mit der Auswerteeinrichtung 106 gekoppelt. Auf dem Steuergerät 110 sind die verschiedenen Anwendungen 112, 114, 116, 118 in entsprechenden virtuellen Speicherbereichen eines Betriebssystems ausführbar. Dabei repräsentiert die erste Anwendung 112 einen ersten XCP-Slave, die zweite Anwendung 114 einen zweiten XCP-Slave und die dritte Anwendung 116 einen dritten XCP-Slave. Zusätzlich ist auf dem Steuergerät 110 die Kommunikationsanwendung 118, beispielsweise zum Austausch von Mess- und Kalibrierdaten über die Kommunikationsschnittstelle 108 ausführbar. Bei der Kommunikationsanwendung 118 handelt es sich gemäß diesem Ausführungsbeispiel um einen Process Measurement Daemon, kurz PMD, zur externen Codeanalyse mittels der Auswerteeinrichtung 106.

Gemäß der Erfindung ist das Steuergerät 110 ausgebildet, um einen Anwendungsadressraum von Anwendungsdaten der Anwendung 112, beispielsweise von Mess- und Kalibrierdaten, mittels des Betriebssystems auszulesen. Dabei bildet der Anwendungsadressraum einen von den Anwendungsdaten belegten physischen Speicherbereich des Steuergeräts 110 ab. Um die Anwendungsdaten über die Kommunikationsschnittstelle 108 zugänglich zu machen, blendet das Steuergerät 110 den Anwendungsadressraum in einen virtuellen Prozessbereich der Kommunikationsanwendung 118 ein. Somit sind die Anwendungsdaten im virtuellen Speicher der Kommunikationsanwendung 118 referenziert und unabhängig von einem tatsächlichen Memory Mapping des Steuergeräts 110 über die Kommunikationsschnittstelle 108 mittels der Auswerteeinrichtung 106 abrufbar.

Gemäß einem weiteren Ausführungsbeispiel ist das Steuergerät 110 ausgebildet, um zusätzlich zum Anwendungsadressraum der Anwendung 112 weitere Anwendungsadressräume der jeweiligen Anwendungsdaten der beiden Anwendungen 114, 116 auszulesen und in den virtuellen Adressraum der Kommunikationsanwendung 118 einzublenden, sodass auch auf die Anwendungsdaten der beiden Anwendungen 114, 116 über den virtuellen Adressraum der Kommunikationsanwendung 118 zugegriffen werden kann.

Gemäß einem Ausführungsbeispiel weist das Steuergerät 110 keine Hardwareeinheit zur Speicherverwaltung auf. Stattdessen ist die Kommunikationsanwendung 118 ausgebildet, um direkt auf den physikalischen Speicher zuzugreifen. Ferner ist die Kommunikationsanwendung 118 ausgebildet, um virtuelle Speicher der Anwendungen 112, 114, 116 direkt auszulesen oder von den virtuellen Speichern der Anwendungen 112, 114, 116 umfasste Anwendungsadressräume zu empfangen.

Gemäß einem Ausführungsbeispiel ist das Steuergerät 110 in einem Fahrzeug angeordnet und die Auswerteeinrichtung 106 ebenfalls in dem Fahrzeug oder außerhalb des Fahrzeugs angeordnet. Beispielsweise wird die Auswerteeinrichtung 106 nur zeitweise, beispielsweise während eines Werkstattaufenthalts des Fahrzeugs über die Kommunikationsschnittstelle 108 mit dem Steuergerät 110 gekoppelt.

Fig. 2 zeigt eine schematische Darstellung des Steuergeräts 110 aus Fig. 1 gemäß einem Ausführungsbeispiel. Gezeigt ist eine Software-Architektur auf Basis eines POSIX-Echtzeitbetriebssystems 200, das die Prozesse der verschiedenen Anwendungen 112, 114, 118 verwaltet, und eines Mikroprozessors 202 als Recheneinheit.

Gemäß diesem Ausführungsbeispiel umfasst das Steuergerät 110 mehrere voneinander unabhängige Programme oder Anwendungen 112, 114 in Form von ELF-Dateien (ELF = Executable and Linking Format), die binär in einem nicht flüchtigen Speicher des Steuergeräts 110 liegen. Beispielsweise basiert die erste Anwendung 112 auf einer ELF-Datei "A.elf", die zweite Anwendung 114 auf einer ELF-Datei "B.elf", eine x-te Anwendung auf einer ELF-Datei "X.elf".

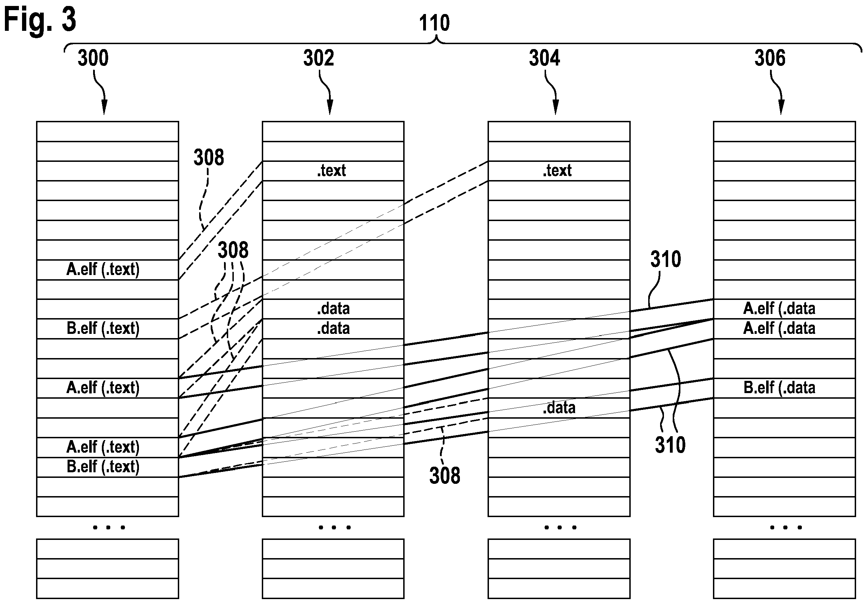

Beim Start der Anwendungen 112, 114, 118 sorgt ein Betriebssystem-Loader dafür, dass die notwendigen Ressourcen physikalisch allokiert werden. Dabei werden physikalische Speicherpages, beispielsweise ä 4 KB, reserviert und an eine möglicherweise andere Adresse im jeweiligen virtuellen Adressraum, auch als Anwendungsadressraum bezeichnet, des Prozesses der jeweiligen Anwendung 112, 114, 118 eingeblendet, wie es nachfolgend anhand von Fig. 3 beschrieben wird.

Fig. 3 zeigt eine schematische Darstellung einer Speicherorganisation in einem Steuergerät 110 gemäß einem Ausführungsbeispiel, etwa dem vorangehend anhand der Figuren 1 und 2 beschriebenen Steuergerät. Gezeigt sind ein physischer Speicher 300 des Steuergeräts 110 sowie beispielhaft ein erster virtueller Speicher 302, der einen virtuellen Prozessbereich der ersten Anwendung repräsentiert, ein zweiter virtueller Speicher 304, der einen virtuellen Prozessbereich der zweiten Anwendung repräsentiert, sowie ein weiterer virtueller Speicher 306, der der Kommunikationsanwendung, hier dem Process Measurement Daemon, zugeordnet ist. Der erste virtuelle Speicher 302 ist beispielhaft einer Anwendung oder einem Prozess A.elf und der zweite virtuelle Speicher 304 einer Anwendung oder einem Prozess B.elf zugeordnet.

Die vier Speicher 300, 302, 304, 306 sind schematisch je als Memory-Page-Tabelle mit einer Mehrzahl von Zeilen dargestellt, von denen jede einen bestimmten Speicherbereich gleicher Größe mit eindeutiger Adresse, etwa mit einer Hexadezimaladresse von 0x...0000 bis 0xF...FFFF, repräsentiert. Von den jeweiligen Anwendungsdaten belegte Speicherbereiche sind mit der Endung ".data" markiert. Sonstige anwendungsbezogene Daten sind mit der Endung ".text" markiert.

In den ersten virtuellen Speicher 302 sind die .text- und .data-Dateien der ersten Anwendung eingeblendet. Analog dazu sind in den zweiten virtuellen Speicher 304 die .text- und .data-Dateien der zweiten Anwendung eingeblendet. In den weiteren virtuellen Speicher 306 sind die data-Dateien sowohl der ersten als auch der zweiten Anwendung, d. h. deren jeweilige Anwendungsdaten, eingeblendet und von dort aus über die Kommunikationsschnittstelle abrufbar.

Die in dem ersten virtuellen Speicher 302 enthaltenen Daten können als Anwendungsadressraum eines Prozesses der ersten Anwendung aufgefasst werden. Die in dem zweiten virtuellen Speicher 304 enthaltenen Daten können als Anwendungsadressraum eines Prozesses der zweiten Anwendung aufgefasst werden. Die in dem weiteren virtuellen Speicher 306 enthaltenen Daten können als virtueller Adressraum des weiteren virtuellen Speichers 306 aufgefasst werden.

Die Anwendungsdaten werden bereitgestellt, indem die zu messenden Prozesse, hier beispielsweise die Prozesse A.elf und B.elf der ersten und zweiten Anwendung, beim Start über Interprozesskommunikation der Kommunikationsanwendung mitteilen, welche Speicherbereiche genau die jeweiligen Anwendungsdaten enthalten. Es werden unter anderem Informationen über physikalische und virtuelle Adresse der entsprechenden Datensektionen übermittelt. Die Kommunikationsanwendung blendet sich die physikalischen Speicherbereiche der zu messenden Anwendungen nun in ihren virtuellen Prozessbereich, hier den weiteren virtuellen Speicher 306, ein. Der Adressraum des weiteren virtuellen Speichers 306 kann somit die auf den physikalischen Speicher 300 bezogenen physikalischen Speicherbereiche der ersten und zweiten Anwendung abbilden. Anschließend kann ein externes Messprogramm, das in einer extern zu dem Steuergerät angeordneten Vorrichtung ausgeführt werden kann, mit der Kommunikationsanwendung kommunizieren und die Anwendungsdaten abfragen, etwa über Ethernet. Dabei benötigt das externe Messprogramm keinerlei Kenntnis des tatsächlich im Steuergerät 110 vor sich gehenden Memory-Mappings, womit sämtliche aus der Mikrocontroller-Welt bekannten Messtechniken ohne Veränderungen weiterverwendet werden können.

Das Mapping zwischen dem physischen Speicher 300 und den virtuellen Speichern 302, 304, 306 ist mit mehreren Verbindungslinien angedeutet. Dabei repräsentieren die mit dem Bezugszeichen 308 gekennzeichneten Verbindungslinien ein normales Programm-Mapping mittels MMU, während die mit dem Bezugszeichen 310 gekennzeichneten Verbindungslinien ein Mess- und Kalibrier-Mapping repräsentieren.

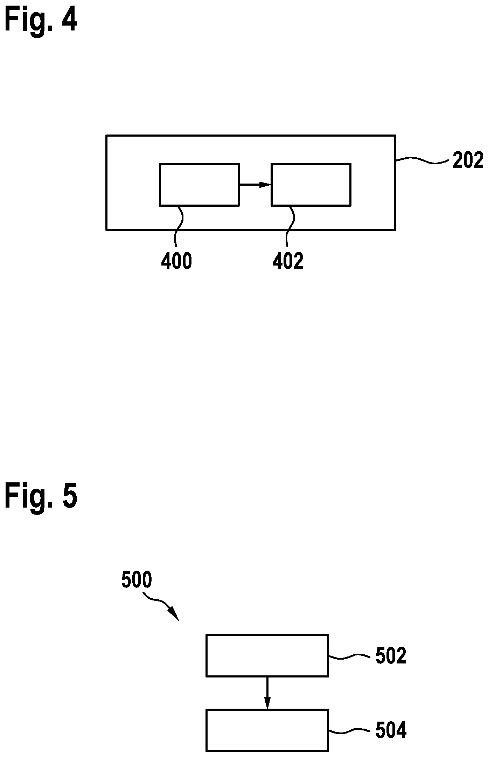

Fig. 4 zeigt eine schematische Darstellung eines Mikroprozessors 202 aus Fig. 2 gemäß einem Ausführungsbeispiel. Gemäß diesem Ausführungsbeispiel umfasst der Mikroprozessor 202 eine Ausleseeinheit 400 zum Auslesen der Anwendungsadressräume sowie eine Einblendeeinheit 402 zum Einblenden des Anwendungsadressraumes in den zugehörigen virtuellen Speicher der Kommunikationsanwendung. Die Ausleseeinheit 400 und die Einblendeeinheit 402 können in Software als Teile der Kommunikationsanwendung und/oder einer einen genannten Anwendungsadressraum nutzenden Anwendung des Steuergeräts realisiert sein.

Fig. 5 zeigt ein Ablaufdiagramm eines Verfahrens 500 zum Bereitstellen von Anwendungsdaten gemäß einem Ausführungsbeispiel. Das Verfahren 500 kann beispielsweise von einem Steuergerät, wie es vorangehend anhand der Figuren 1 bis 4 beschrieben ist, ausgeführt werden. Dabei wird in einem ersten Schritt 502 der Anwendungsadressraum, der einen von den Anwendungsdaten belegten physischen Speicherbereich des Steuergeräts repräsentiert, ausgelesen. In einem weiteren Schritt 504 erfolgt das Einblenden des Anwendungsadressraumes in den virtuellen Speicher der Kommunikationsanwendung. Damit sind die Anwendungsdaten über den virtuellen Speicher der Kommunikationsanwendung von außen abrufbar.

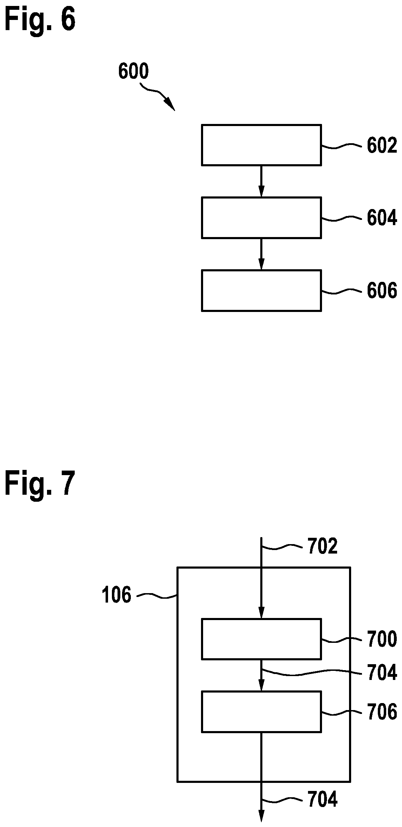

Fig. 6 zeigt ein Ablaufdiagramm eines Verfahrens 600 zum Kalibrieren eines Steuergeräts gemäß einem Ausführungsbeispiel. Das Verfahren 600 kann beispielsweise von einer Auswerteeinrichtung, wie sie vorangehend anhand von Fig. 1 beschrieben ist, ausgeführt werden. Dabei werden in einem Schritt 602 die im virtuellen Speicher der Kommunikationsanwendung referenzierten Anwendungsdaten durch Ansprechen der Kommunikationsanwendung über die Kommunikationsschnittstelle in die Auswerteeinrichtung eingelesen. In einem weiteren Schritt 604 wird unter Verwendung der Anwendungsdaten eine Kalibrierinformation, beispielsweise eine A2L-Beschreibungsdatei, zum Verstellen steuergeräteinterner Parameter generiert. In einem Schritt 606 wird die Kalibrierinformation oder eine davon abgeleitete Information an die Kommunikationsschnittstelle ausgegeben, um die betreffenden Parameter im Steuergerät in geeigneter Weise zu verstellen.

Fig. 7 zeigt eine schematische Darstellung einer Auswerteeinrichtung 106 gemäß einem Ausführungsbeispiel. Die Auswerteeinrichtung 106 umfasst eine Generiereinheit 700, die ausgebildet ist, um unter Verwendung zumindest eines ersten Datenpakets 702, das die vom Steuergerät bereitgestellten Anwendungsdaten repräsentiert, zumindest ein zweites Datenpaket 704 zu generieren, das die Kalibrierinformation zum Kalibrieren des Steuergeräts repräsentiert. Eine Ausgabeeinheit 706 ist ausgebildet, um das zweite Datenpaket 704 oder ein darauf basierendes Datenpaket an die Kommunikationsschnittstelle auszugeben.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (600) zum Messen und Kalibrieren eines Steuergeräts (110) für ein Fahrzeug unter Verwendung von Anwendungsdaten zumindest einer auf einem Steuergerät (110) für ein Fahrzeugs ausführbaren Anwendung (112), wobei das Steuergerät (110) Komponenten (202; 300, 302, 304, 306; 400, 402) zum Ausführen eines Betriebssystems (200) mit virtueller Speicherverwaltung umfasst, wobei das Verfahren (600) folgende Schritte umfasst:
Auslesen (502) eines Anwendungsadressraumes eines ersten virtuellen Speichers (302), wobei der Anwendungsadressraum einem Prozess der Anwendung zugeordnet ist und einen von den Anwendungsdaten belegten Bereich eines physischen Speichers (300) des Steuergeräts (110) abbildet; und
Einblenden (504) des Anwendungsadressraumes in einen virtuellen Adressraum eines weiteren virtuellen Speichers (306), der einem Prozess einer Kommunikationsanwendung (118) zum Datenaustausch über eine Kommunikationsschnittstelle (108) zu einer steuergeräteexternen Auswerteeinrichtung (106) zugeordnet ist, um die Anwendungsdaten über die Kommunikationsschnittstelle (108) bereitzustellen;
wobei das Verfahren (600) ferner folgende Schritte umfasst:
Einlesen (602) der Anwendungsdaten über die Kommunikationsschnittstelle (108) unter Verwendung der Kommunikationsanwendung (118);
Generieren (604) einer Kalibrierinformation zum Verstellen zumindest eines Parameters des Steuergeräts (110) unter Verwendung der Anwendungsdaten; und
Ausgeben (606) der Kalibrierinformation zur Durchführung von Mess- oder Verstelloperationen an die Kommunikationsschnittstelle (108).

2. Verfahren (600) gemäß Anspruch 1, mit einem Schritt des Bereitstellens der Anwendungsdaten über eine XCP-Schnittstelle als die Kommunikationsschnittstelle (108).

3. Verfahren (600) gemäß einem der vorangegangenen Ansprüche, bei dem der Prozess der Kommunikationsanwendung (118) ausgebildet ist, um den Schritt (502) des Auslesens und den Schritt des Einblendens (504) ohne Zuhilfenahme einer Hardwareeinheit zur Speicherverwaltung (MMU) auszuführen.

4. Verfahren (600) gemäß einem der vorangegangenen Ansprüche, bei dem im Schritt des Auslesens (502) zumindest eine physische und/oder virtuelle Adresse der Anwendungsdaten als der Anwendungsadressraum ausgelesen wird.

5. Verfahren (600) gemäß einem der vorangegangenen Ansprüche, bei dem im Schritt des Einblendens (504) der Anwendungsadressraum (302) mittels eines POSIX-basierten Betriebssystems (200) des Steuergeräts (110) in den virtuellen Adressraum eingeblendet wird.

6. Verfahren (600) gemäß einem der vorangegangenen Ansprüche, bei dem im Schritt des Auslesens (502) der Anwendungsadressraum ansprechend auf ein vorbestimmtes Ereignis des der Anwendung (112) zugeordneten Prozesses ausgelesen wird.

7. Verfahren (600) gemäß einem der vorangegangenen Ansprüche, bei dem im Schritt des Auslesens (502) ein zweiter virtueller Anwendungsadressraum eines zweiten virtuellen Speichers (304), der einem Prozess einer zweiten auf dem Steuergerät (110) ausführbaren Anwendung (114) zugeordnet ist und einen von zweiten Anwendungsdaten der zweiten Anwendung (114) belegten Bereich des physischen Speichers (300) repräsentiert, ausgelesen wird, wobei im Schritt des Einblendens (504) der zweite Anwendungsadressraum (304) in den virtuellen Adressraum (306) eingeblendet wird, um die zweiten Anwendungsdaten über die Kommunikationsschnittstelle (108) bereitzustellen.

8. Vorrichtung mit einem Steuergerät (110) für ein Fahrzeug, wobei das Steuergerät (110)einen Mikroprozessor (202), einen physischen Speicher (300), einen einer auf dem Steuergerät (110) ausführbaren Anwendung (112) zugeordneten ersten virtuellen Speicher (302) und einen einer Kommunikationsanwendung (118) zugeordneten weiteren virtuellen Speicher (306) zum Ausführen eines Betriebssystems (200) mit virtueller Speicherverwaltung umfasst, wobei das Steuergerät (110) ausgebildet ist, um einen Anwendungsadressraum des ersten virtuellen Speichers (302) auszulesen, wobei der Anwendungsadressraum einem Prozess der Anwendung zugeordnet ist und einen von Anwendungsdaten der Anwendung (112) belegten Bereich des physischen Speichers (300) des Steuergeräts (110) abbildet, und ausgebildet ist, um den Anwendungsadressraum in einen virtuellen Adressraum eines weiteren virtuellen Speichers (306) einzublenden, der einem Prozess der Kommunikationsanwendung (118) zum Datenaustausch über eine Kommunikationsschnittstelle (108) zu einer steuergeräteexternen Auswerteeinrichtung (106) zugeordnet ist, um die Anwendungsdaten über die Kommunikationsschnittstelle (108) bereitzustellen;
wobei die Vorrichtung ferner die Auswerteeinrichtung (106) aufweist, die eine Generiereinheit (700) und eine Ausgabeeinheit (706) umfasst, wobei die Generiereinheit (700) ausgebildet ist, um eine Kalibrierinformation zum Verstellen zumindest eines Parameters des Steuergeräts (110) unter Verwendung der über die Kommunikationsschnittstelle (108) bereitgestellten Anwendungsdaten zu generieren, und wobei die Ausgabeeinheit (706) ausgebildet ist, um die Kalibrierinformation zur Durchführung von Mess- oder Verstelloperationen an die Kommunikationsschnittstelle (108) auszugeben.

9. Computerprogramm, umfassend Befehle, die bei der Ausführung des Computerprogramms durch einen Computer diesen veranlassen, das Verfahren (600) gemäß einem der Ansprüche 1 bis 7 auszuführen.

10. Maschinenlesbares Speichermedium, auf dem das Computerprogramm nach Anspruch 9 gespeichert ist.

## Claims

1. Method (600) for measuring and calibrating a control unit (110) for a vehicle using application data of at least one application (112) which is executable on a control unit (110) for a vehicle, wherein the control unit (110) comprises components (202; 300, 302, 304, 306; 400, 402) for executing an operating system (200) having virtual memory management, wherein the method (600) comprises the following steps:
reading (502) an application address space of a first virtual memory (302), wherein the application address space is allocated to a process of the application and maps an area of a physical memory (300) of the control unit (110) occupied by the application data; and
overlaying (504) the application address space in a virtual address space of a further virtual memory (306) which is allocated to a process of a communication application (118) for data exchange, via a communication interface (108), to an evaluation device (106) external to the control unit in order to provide the application data via the communication interface (108);
wherein the method (600) further comprises the following steps:
reading in (602) the application data via the communication interface (108) using the communication application (118);
generating (604) calibration information for adjusting at least one parameter of the control unit (110) using the application data; and
outputting (606) the calibration information for carrying out measurement operations or adjustment operations at the communication interface (108).

2. Method (600) according to Claim 1, having a step of providing the application data via an XCP interface as the communication interface (108).

3. Method (600) according to either of the preceding claims, in which the process of the communication application (118) is designed to execute the reading step (502) and the overlaying step (504) without the use of a hardware unit for memory management (MMU).

4. Method (600) according to one of the preceding claims, in which, in the reading step (502), at least one physical and/or virtual address of the application data is read as the application address space.

5. Method (600) according to one of the preceding claims, in which, in the overlaying step (504), the application address space (302) is overlaid in the virtual address space by means of a POSIX-based operating system (200) of the control unit (110).

6. Method (600) according to one of the preceding claims, in which, in the reading step (502), the application address space is read in response to a predetermined event of the process allocated to the application (112).

7. Method (600) according to one of the preceding claims, in which, in the reading step (502), a second virtual application address space of a second virtual memory (304) which is allocated to a process of a second application (114) executable on the control unit (110) and represents an area of the physical memory (300) occupied by second application data of the second application (114) is read, wherein, in the overlaying step (504), the second application address space (304) is overlaid in the virtual address space (306) in order to provide the second application data via the communication interface (108).

8. Apparatus having a control unit (110) for a vehicle, wherein the control unit (110) comprises a microprocessor (202), a physical memory (300), a first virtual memory (302), allocated to an application (112) which is executable on the control unit (110), and a further virtual memory (306), allocated to a communication application (118), for executing an operating system (200) having virtual memory management, wherein the control unit (110) is designed to read an application address space of the first virtual memory (302), wherein the application address space is allocated to a process of the application and maps an area of the physical memory (300) of the control unit (110) occupied by application data of the application (112), and is designed to overlay the application address space in a virtual address space of a further virtual memory (306) which is allocated to a process of the communication application (118) for data exchange, via a communication interface (108), to an evaluation device (106) external to the control unit in order to provide the application data via the communication interface (108);
wherein the apparatus further has the evaluation device (106) which comprises a generating unit (700) and an output unit (706), wherein the generating unit (700) is designed to generate calibration information for adjusting at least one parameter of the control unit (110) using the application data provided via the communication interface (108), and wherein the output unit (706) is designed to output the calibration information for carrying out measurement operations or adjustment operations at the communication interface (108) .

9. Computer program, comprising commands which, when the computer program is executed by a computer, cause the latter to execute the method (600) according to one of Claims 1 to 7.

10. Machine-readable storage medium on which the computer program according to Claim 9 is stored.

## Revendications

1. Procédé (600) permettant de mesurer et d'étalonner un appareil de commande (110) pour un véhicule en utilisant des données d'application d'au moins une application (112) exécutable sur un appareil de commande (110) pour un véhicule, dans lequel l'appareil de commande (110) comprend des composants (202 ; 300, 302, 304, 306 ; 400, 402) pour exécuter un système d'exploitation (200) pourvu d'une gestion de mémoire virtuelle, le procédé (600) comprenant les étapes suivantes consistant à :
lire (502) un espace adresse d'application d'une première mémoire virtuelle (302), dans lequel l'espace adresse d'application est associé à un processus de l'application et mappe une zone, occupée par les données d'application, d'une mémoire physique (300) de l'appareil de commande (110) ; et
superposer (504) l'espace adresse d'application à un espace adresse virtuel d'une autre mémoire virtuelle (306) qui est associé à un processus d'une application de communication (118) pour un échange de données par l'intermédiaire d'une interface de communication (108) avec un dispositif d'évaluation (106) externe à l'appareil de commande pour fournir les données d'application par l'intermédiaire de l'interface de communication (108) ;
le procédé (600) comprenant en outre les étapes suivantes consistant à :
lire (602) les données d'application par l'intermédiaire de l'interface de communication (108) en utilisant l'application de communication (118) ;
générer (604) une information d'étalonnage pour régler au moins un paramètre de l'appareil de commande (110) en utilisant les données d'application ; et
délivrer (606) à l'interface de communication (108) l'information d'étalonnage pour effectuer des opérations de mesure et de réglage.

2. Procédé (600) selon la revendication 1, comprenant une étape de fourniture des données d'application par l'intermédiaire d'une interface XCP comme interface de communication (108).

3. Procédé (600) selon l'une quelconque des revendications précédentes, dans lequel le processus de l'application de communication (118) est réalisé pour effectuer l'étape (502) de lecture et l'étape de superposition (504) sans avoir recours à une unité matérielle pour la gestion de mémoire (MMU).

4. Procédé (600) selon l'une quelconque des revendications précédentes, dans lequel, à l'étape de lecture (502), au moins une adresse physique et/ou virtuelle des données d'application est lue comme l'espace adresse d'application.

5. Procédé (600) selon l'une quelconque des revendications précédentes, dans lequel, à l'étape de superposition (504), l'espace adresse d'application (302) est superposé à l'espace adresse virtuel au moyen d'un système d'exploitation (200) basé sur POSIX de l'appareil de commande (110).

6. Procédé (600) selon l'une quelconque des revendications précédentes, dans lequel, à l'étape de lecture (502), l'espace adresse d'application est lu en réponse à un événement prédéterminé du processus associé à l'application (112).

7. Procédé (600) selon l'une quelconque des revendications précédentes, dans lequel, à l'étape de lecture (502), un deuxième espace adresse d'application virtuel d'une deuxième mémoire virtuelle (304) est lu qui est associé à un processus d'une deuxième application (114) exécutable sur l'appareil de commande (110) et représente une zone, occupée par des deuxièmes données d'application de la deuxième application (114), de la mémoire physique (300), dans lequel à l'étape de superposition (504), le deuxième espace adresse d'application (304) est superposé à l'espace adresse virtuel (306) afin de fournir les deuxièmes données d'application par l'intermédiaire de l'interface de communication (108).

8. Dispositif comprenant un appareil de commande (110) pour un véhicule, dans lequel l'appareil de commande (110) comprend un microprocesseur (202), une mémoire physique (300), une première mémoire virtuelle (302) associée à une application (112) exécutable sur l'appareil de commande (110) et une autre mémoire virtuelle (306) associée à une application de communication (118) pour exécuter un système d'exploitation (200) pourvu d'une gestion de mémoire virtuelle, dans lequel l'appareil de commande (110) est réalisé pour lire un espace adresse d'application de la première mémoire virtuelle (302), dans lequel l'espace adresse d'application est associé à un processus de l'application et mappe une zone, occupée par des données d'application, de l'application (112) de la mémoire physique (300) de l'appareil de commande (110), et est réalisé pour superposer l'espace adresse d'application à un espace adresse virtuel d'une autre mémoire virtuelle (306) qui est associé à un processus de l'application de communication (118) pour un échange de données par l'intermédiaire d'une interface de communication (108) avec un dispositif d'évaluation (106) externe à l'appareil de commande, afin de fournir les données d'application par l'intermédiaire de l'interface de communication (108) ;
dans lequel le dispositif présente en outre le dispositif d'évaluation (106) qui comprend une unité de génération (700) et une unité de sortie (706), dans lequel l'unité de génération (700) est réalisée pour générer une information d'étalonnage pour régler au moins un paramètre de l'appareil de commande (110) en utilisant les données d'application fournies par l'intermédiaire de l'interface de communication (108), et dans lequel l'unité de sortie (706) est réalisée pour délivrer à l'interface de communication (108) les informations d'étalonnage pour effectuer des opérations de mesure ou de réglage.

9. Programme informatique, comprenant des instructions qui, lorsque le programme informatique est exécuté par un ordinateur, font que celui-ci exécute le procédé (600) selon l'une quelconque des revendications 1 à 7.

10. Support de stockage lisible par machine sur lequel est stocké le programme informatique selon la revendication 9.
